# EUROPÄISCHE PATENTSCHRIFT

(11) **EP 2 212 592 B1**
(45) Veröffentlichungstag und Bekanntmachung des Hinweises auf die Patenterteilung: **10.08.2011**
(21) Anmeldenummer: 08801721.5
(22) Anmeldetag: 27.08.2008
(51) Int. Cl.: F16J 1/00, F16J 9/22, F02F 3/02

(54) **FUNKTIONSOPTIMIERTE GESTALTUNG DES KOLBEN-RINGFELDBEREICHES BEI STAHLKOLBEN**
FUNCTIONALLY OPTIMIZED DESIGN OF THE PISTON-RING FIELD REGION IN STEEL PISTONS
CONCEPTION FONCTIONNELLEMENT OPTIMISEE DE LA REGION DE CHAMP DE SEGMENTS DE PISTON DANS DES PISTONS EN ACIER

(30) Priorität: 30.11.2007 DE 102007057840
(43) Veröffentlichungstag der Anmeldung: 04.08.2010
(73) Patentinhaber: KS Kolbenschmidt GmbH, 74172 Neckarsulm (DE)
(72) Erfinder: GNIESMER, Volker, 31061 Alfeld (DE)
(74) Vertreter: Greif, Thomas
(86) Internationale Anmeldenummer: PCT/EP2008/006992
(87) Internationale Veröffentlichungsnummer: WO 2009/068125

(56) Entgegenhaltungen:
- DE-A1- 2 832 953
- DE-A1- 4 309 776
- DE-C1- 19 703 121
- JP-A- 11 201 283
- SU-A1- 1 423 765
- US-A- 5 906 182

## Beschreibung

Die Erfindung betrifft einen Stahlkolben einer Brennkraftmaschine, der in einer Zylinderlaufbuchse geführt ist und ein Kolbenoberteil und einen Kolbenschaft umfasst. Ein Kolbenboden des Kolbenoberteils geht umfangsseitig in einen Feuersteg über, an dem sich ein zur Aufnahme von Kolbenringen bestimmtes Ringfeld anschließt. Das Ringfeld ist zur Aufnahme von Kolbenringen bestimmt, die in Ringnuten durch einen Ringsteg beabstandet positioniert sind, gemäß den Merkmalen des Oberbegriffs des Patentanspruchs 1.

Kolben für Brennkraftmaschinen müssen eine Vielzahl unterschiedlicher Aufgaben erfüllen. Neben einer Kraftübertragung und der Geradführung muß der Kolben den auftretenden thermischen und mechanischen Belastungen standhalten sowie die Anforderungen hinsichtlich Verschleiß erfüllen. Weiterhin soll der Kolben eine wirksame Abdichtung gegenüber Öl, verbunden mit geringen Durchblasmengen (BlowBy) aufweisen.

Ein hoher Kraftstoff-, Ölverbrauch und Leckgasdurchtritt verschlechtern entscheidend die Emissionen und führen zu einer erhöhten Umweltbelastung der Brennkraftmaschine. Durch die Kolbengestaltung sind die motorischen Verbrauchswerte beeinflussbar und damit die Wirtschaftlichkeit einer Brennkraftmaschine. Um diese Anforderungen zu erfüllen sind Kolbenkonzepte mit speziell ausgeführten, beispielsweise zylindrisch oder ballig geformten Ringstegen bekannt.

Der DE 20 26 272 ist ein Kolben zu entnehmen, bei dem in einem Ringsteg eine das Ringspaltvolumen deutlich vergrößernde Ölfangnut dazu vorgesehen ist, die Bildung von Ölkohle im Bereich der Ringstege zu unterbinden. Diese Anordnung der Ölfangnut hat sich bewährt unter der Voraussetzung, dass der Querschnitt der Nut ausreichend groß ist. Insbesondere aus Festigkeitsgründen ist die bekannte Ölfangnut bei Kolben heutiger Brennkraftmaschinen aufgrund einer erhöhten spezifischen Leistung nicht anwendbar.

Gemäß der DE 28 32 953 bildet der Kolben einen gestuften Ringsteg, der sich über den Umfang der Ringnut des unteren Kolbenrings erstreckt und folglich ein Ringspaltvolumen zwischen dem Kolben und der gegenüberliegenden Zylinderlaufbahn vergrößert. Gleichzeitig stellt sich durch das vergrößerte Ringspaltvolumen ein verringerter Gasdruck ein. Der gestufte Ringsteg in Verbindung mit dem reduzierten Gasdruck bewirkt einen nachteiligen Einfluß auf die Kolbenringfunktion.

Aus DE 4309 776 A1 ist ein kolben bekannt mit einer ringförmigen nutenartigen Aussparung, die im Querschnitt gesehen einen Bogenabschnitt beinhaltet. Hiermit wird die verbranchte Ölmenge vermindert.

Die zuvor beschriebenen Maßnahmen beschränken sich auf Ringsteg-Ausbildungen, ohne dabei spezifische Einbausituationen oder thermische Beanspruchungen des Kolbens zu berücksichtigen.

Der Erfindung liegt daher die Aufgabe zugrunde, einen aus Stahl hergestellten Kolben mit einer geringeren belastungsabhängigen Deformation zu realisieren, zum Zweck einer verbesserten Funktionssicherheit und minimierter motorischer Verbrauchswerte.

Diese Aufgabe wird erfindungsgemäß durch die Merkmale des Patentanspruchs 1 gelöst.

Erfindungsgemäß ist vorgesehen, für Stahlkolben im Bereich thermisch hochbelasteter Bereiche lokal eine funktionsoptimierte Geometrie vorzusehen, die belastungsabhängige, unerwünschte Deformationen minimiert und die gleichzeitig motorische Verbrauchswerte, insbesondere den Ölverbrauch und den Leckgasdurchtritt (BlowBy) reduziert.

Dazu ist in dem Ringsteg zwischen der ersten und der zweiten Ringnut erfindungsgemäß eine Entlastungsnut eingebracht, die eine gegenüber der zweiten Ringnut geringere Tiefe aufweist, sowie unterschiedlich geneigt verlaufende Oberund Unterflanken und einen gerundeten Nutgrund. Diese vorteilhaft ein Zusammenklappen der zweiten Ringnut vermeidende Maßnahme verbessert die Kolbenringfunktionalität, da ein Kollabieren des Kolbenrings durch ein vorzeitiges Klemmen wirksam verhindert wird. Gleichzeitig bleibt ein ungehindertes Kolbenringverhalten erhalten, wodurch sich verbesserte, reduzierte Verbrauchskennwerte für Öl einstellen. Im Betriebszustand des Kolbens bewirkt die auch als Zwischendehnfuge zu bezeichnende Entlastungsnut eine thermische Isolierung, indem sich der Nutquerschnitt aufgrund einer elastischen Nutflankenverformung verengt und folglich eine thermische Ausdehnung der Ringstegoberfläche kompensiert. Da der Entlastungsnut kein Kolbenring zugeordnet ist, hat dieser Effekt keine nachteiligen Folgen. Durch die Entlastungsnut stellt sich vorteilhaft eine lokal begrenzte, elastische Kolbenverformung ein, wodurch eine unerwünschte belastungsabhängige Deformation der zweiten Ringnut unterbleibt und gleichzeitig auf den Einsatz spezieller Kolbenringe verzichtet werden kann. Die konstruktive Ausgestaltung sowie Lage der Entlastungsnut kann an die jeweilige Kolbengeometrie bedarfsgerecht in der Tiefe, Höhe oder Breite variabel angepasst werden. Vorteilhaft ermöglicht die Entlastungsnut eine vollständige Substituierung bisheriger Maßnahmen, um ein Klemmen oder Kneifen der zweiten Ringnut insbesondere bei hochbelasteten Kolben in Folge thermischer Deformation zu vermeiden. Die erfindungsgemäße lokale Geometrieoptimierung des Außenprofils verbessert außerdem die Funktionssicherheit des Kolbens, verbunden mit einem reduzierten Verschleiß sowie einer Erhöhung der Fresssicherheit.

Erfindungsgemäß ist weiterhin ein enges Spiel zwischen dem Kolben und der Zylinderlaufbuchse im Bereich des ersten Ringstegs vorgesehen. Die Kolbenauslegung erfolgt so, dass ein enges, einen unmittelbaren Kontakt zu der Innenwandung der Zylinderlaufbuchse vermeidendes Einbauspiel und/oder Betriebsspiel einen Gasdurchlass bzw. die Durchblasmengen (BlowBy) minimiert. Das Außenprofil des erfindungsgemäß gestalteten ersten Ringstegs wird dazu bevorzugt als eine Freiformfläche durch ein Feindrehen hergestellt. Dabei sind das Außenprofil sowie die Entlastungsnut vorteilhaft auf der Druckseite (DS) und der Gegendruckseite (GDS) des Kolbens geometrisch weitestgehend übereinstimmend gestaltet.

Ein bevorzugtes Auslegungsmerkmal sieht als radiales Kolbenspiel ein Maß zwischen 15 µm und 60 µm vor, das sich zwischen dem oberen, der ersten Ringnut benachbarten Bereich des Ringstegs und der Innenwandung der Zylinderlaufbuchse einstellt. Das bevorzugt enge Spiel wird durch die Endbearbeitung der Kolben-Oberfläche so gewählt, dass sich kein den Verschleiß und das Fressen erhöhender, unmittelbarer Kontakt zu der Zylinderlaufbuchse einstellt. Damit ergibt sich ein für die Kolbenfunktion optimales Einbau- bzw. Betriebsspiel, mit dem gleichzeitig günstige Verbrauchskennwerte erzielbar sind, insbesondere eine deutliche Reduktion des Leckgasdurchtritts.

Erfindungsgemäβ ist für den ersten Ringsteg eine Konizität vorgesehen, die sich von der zweiten Ringnut in Richtung der ersten Ringnut umlaufend aufweitet. Die Ringsteg-Konizität kann dabei von einer Grundform des Kolbens abweichend ausgebildet sein und beispielsweise einer Grundovalität des Kolbens überlagert sein. Die Auslegung der Konizität erfolgt unter Berücksichtigung der sich im Betriebszustand einstellenden belastungsabhängigen Deformation des Ringsteges sowie des radialen Kolbenspiels zwischen 15 µm und 60 µm.

Vorteilhafte geometrische Ausgestaltungen der erfindungsgemäßen Entlastungsnut sehen vor, dass diese eine Tiefe von ≥ 70% der radialen Tiefe der zweiten Ringnut aufweist. Bevorzugt ist diese Entlastungsnut in einem definierten Abstand zu der zweiten Ringnut in den Ringsteg eingebracht. Das Maß entspricht vorteilhaft ≥20% des Abstandmaßes zwischen beiden Ringnuten. Ein weiteres bevorzugtes Auslegungsmerkmal für die Entlastungsnut sieht eine Nuthöhe von > 1,5 mm, sowie ein Tiefen-/Höhenverhältnis von > 1 vor. Um den abweichenden thermischen Belastungen zu entsprechen, verlaufen die Ober- und die Unterflanke der Entlastungsnut in unterschiedlichen Winkeln gegenläufig geneigt zueinander. Gemäß einer vorteilhaften Auslegung ist der Neigungswinkel der Oberflanke größer als der Neigungswinkel der Unterflanke ausgeführt. Bedarfsabhängig kann erfindungsgemäß der Neigungswinkel der Unterflanke größer ausgeführt werden. Aus Festigkeitsgründen, insbesondere um eine nachteilige Rissgefahr zu unterbinden, ist der Nutgrund gerundet. Um einen maximalen Radiuswert realisieren zu können, ist dieser an die sich im Nutgrund einstellende Nuthöhe angepasst.

Die vielfältige Gestaltungsmöglichkeit der Erfindung unterstreichend, sind weiterhin in der Oberflanke der zweiten Ringnut zumindest eine, bevorzugt mehrere symmetrisch umfangsverteilt angeordnete Aussparungen eingebracht. Diese Maßnahme bewirkt einen verbesserten Druckausgleich zwischen dem ersten Ringsteg und der zweiten Ringnut und bewirkt einen die Kolbenringfunktion verbessernden Druckaufbau in der zweiten Ringnut. Der mit einem erhöhten Druck beaufschlagte Kolbenring ist über die radiale Auflagefläche abgestützt und bildet damit einen optimalen Kontaktbereich an der Innenwandung der Zylinderlaufbuchse. Die partiellen Aussparungen oder Ausnehmungen in der Oberflanke der zweiten Ringnut erstrecken sich vorteilhaft bis nahe an den gerundeten Nutgrund. Die vorteilhaft symmetrisch umfangsverteilt in der Oberflanke der Ringnut eingebrachten Aussparungen bilden ein weitestgehend halbrundartiges Querschnittsprofil. Unabhängig von der Formgebung sind vorzugsweise sechs Aussparungen mit einer Tiefe von ≥ 0,4 mm vorgesehen.

Ausführungsbeispiele der Erfindung werden nachfolgend unter Bezugnahme auf die Zeichnungen näher erläutert, ohne dass die Erfindung hierauf beschränkt ist. Es zeigen:
- Fig.1:: einen Kobenausschnitt, der die Anlage der Kolbenringe an einer Zylinderlaufbuchse darstellt,
- Fig.2:: den zweiten Kolbenring gemäß Figur 1 in einem vergrößerten Maßstab,
- Fig. 3:: vergrößert ein Detail "Z" aus Figur 2,
- Fig. 4:: einen in der Ringnut eingeklemmten zweiten Kolbenring.

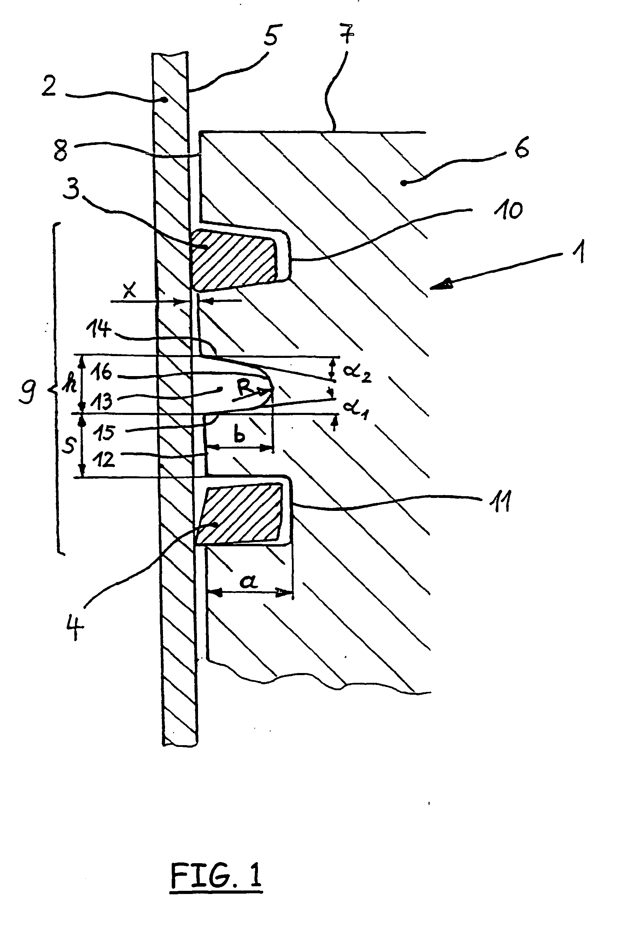

Die Figur 1 zeigt bereichsweise einen Kolben 1, der in einer Zylinderlaufbuchse 2 geführt ist und verdeutlicht dabei die Einbaulage von Kolbenringen 3, 4, die an einer Innenwandung 5 der Zylinderlaufbuchse 2 abgestützt sind. Der als Stahlkolben ausgeführte Kolben 1 bildet in einem Kolbenoberteil 6 einen Kolbenboden 7, der umfangsseitig in einen Feuersteg 8 übergeht und an den sich ein Ringfeld 9 anschließt, in dem zueinander beabstandet die Kolbenringe 3, 4 in Ringnuten 10, 11 positioniert sind. Der obere dem Feuersteg 8 zugeordnete, als ein doppelseitiger Trapezring ausgebildete Kolbenring 3 ist mit einem axialen und radialen Spiel in der entsprechend trapezförmig gestalteten Ringnut 10 eingesetzt. Der untere, als ein Minutenring ausgeführte Kolbenring 4 ist ebenfalls spielbehaftet in der zugehörigen Ringnut 11 positioniert. In einem sich zwischen den Kolbenringen 3, 4 bildenden Ringsteg 12 ist eine Entlastungsnut 13 eingebracht, die im Betriebszustand des Kolbens 1 eine thermische Ausdehnung der Ringstegoberfläche kompensiert und damit ein Verengen der zweiten Ringnut 11 und eine damit verbundene nachteilige Beeinflussung der Kolbenringfunktion vermeidet. Die Entlastungsnut 13 umfasst je eine von einem Nutgrund 16 ausgehende, unterschiedlich geneigt verlaufende Oberflanke 14 und Unterflanke 15. Der sich einstellende Neigungswinkel "α₂" der Oberflanke 14 übertrifft dabei den Neigungswinkel "α₁" der Unterflanke 15. Weitere Auslegungsmerkmale der Entlastungsnut 13 sehen eine Nuthöhe "h" von > 1,5 mm vor und eine Tiefe "b", die ≥ 70% der radialen Tiefe "a" der zweiten Ringnut 11 entspricht. Für die Entlastungsnut 13 ist außerdem ein Tiefen-/Höhenverhältnis (b/h) von > 1 vorgesehen. Der Nutgrund 16 wird von einem Radius "R" gebildet, dessen Wert von der Nuthöhe im Bereich des Nutgrundes 16 bestimmt ist. Die Lage der Entlastungsnut 13 im Ringsteg 12 wird durch ein Abstandsmaß "s" bestimmt, das ≥ 20% des Abstandes zwischen der ersten Ringnut 10 und der zweiten Ringnut (11) beträgt. Zwischen dem oberen, der ersten Ringnut 10 zugeordneten Bereich des Ringstegs 12 und einer Innenwandung 5 der Zylinderlaufbuchse 2 ist ein radiales Kolbenspiel "x" von 15 µm bis 60 µm vorgesehen. Zur Darstellung dieses den Leckgasdurchtritt (BlowBy) minimierenden lokalen Spiels weist der Ringsteg 12 eine Konizität auf, die sich von der zweiten Ringnut 11 ausgehend zu der ersten Ringnut 10 umlaufend aufweitet, wodurch die Außenkontur des Ringsteges 12 so eng wie möglich, jedoch ohne unmittelbaren Kontakt bis an die Innenwandung 5 der Zylinderlaufbuchse 2 geführt ist.

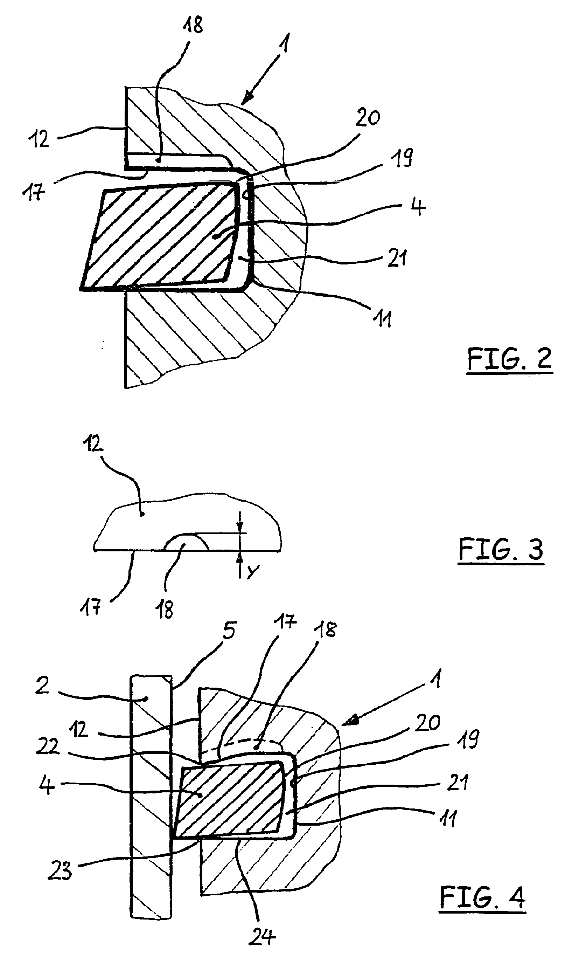

Die Figuren 2 bis 4 zeigen in einem vergrößerten Maßstab den in der Ringnut 11 des Kolbens 1 eingesetzten Kolbenring 11 sowie ein Detail der Ringnut 11.

Gemäß der Figur 2 umfasst die Oberflanke 17 der zweiten Ringnut 11 eine Aussparung 18, die sich bis nahe an den Nutgrund 19 erstreckt. Durch diese Maßnahme wird ein von dem Nutgrund 19 und einer Innenseite 20 des Kolbenrings 4 begrenzter Ringraum 21 der Ringnut 11 von dem sich zwischen den Kolbenringen 3,4 aufbauenden Gasdruck beaufschlagt, um die Funktion des Kolbenrings 4 zu optimieren.

Die Figur 3 zeigt zur Verdeutlichung der Lage und Größe der Aussparung 18 in einer Vorderansicht einen Ausschnitt des Ringstegs 12. Danach ist die Aussparung 18 weitestgehend halbrundartig mit einer Höhe "y" in die Oberflanke 17 des Ringstegs 12 eingebracht. Zur optimalen Druckbeaufschlagung des Ringraumes 21 sind mehrere, beispielsweise sechs symmetrisch umfangsverteilte Aussparungen 18 vorgesehen.

Die Figur 4 zeigt die aufgrund einer thermischen Belastung des Kolbens 1 verengte Ringnut 11, deren Oberflanke 17 bis zu einer Anlage an den Kolbenring 4 verformt ist, wodurch sich eine gemeinsame Kontaktzone 22 einstellt. Gegenseitig ist der Kolbenring 4 über die Kontaktzone 23 an der Unterflanke 24 der Ringnut 11 abgestützt. Ein Verengen, bzw. ein Kneifen der Ringnut 11 kann zu einem Kollabieren der Kolbenringfunktion führen. Gemäß der Erfindung ist als wirksame Gegenmaßnahme zur Vermeidung einer nachteiligen Einflußnahme von thermischen Verformungen des Ringsteges 12 auf die Ringnut 11 die Entlastungsnut 13 in den Ringsteg 12 eingebracht. Um weiterhin bei einer thermischen Belastung des Kolbens 1 die Kolbenringfunktion zu gewährleisten, sind zur Druckbeaufschlagung des Ringraumes 21 und folglich des Kolbenrings 4 in der Oberflanke der Ringnut 11 Aussparungen 18 vorgesehen.

### Bezugszeichenliste:

- 1: Kolben
- 2: Zylinderlaufbuchse
- 3: Kolbenring
- 4: Kolbenring
- 5: Innenwandung
- 6: Kolbenoberteil
- 7: Kolbenboden
- 8: Feuersteg
- 9: Ringfeld
- 10: Ringnut
- 11: Ringnut
- 12: Ringsteg
- 13: Entlastungsnut
- 14: Oberflanke
- 15: Unterflanke
- 16: Nutgrund
- 17: Oberflanke
- 18: Aussparung
- 19: Nutgrund
- 20: Innenseite
- 21: Ringraum
- 22: Kontaktzone
- 23: Kontaktzone
- 24: Unterflanke

## Patentansprüche

1. Stahlkolben anordnung (1) einer Brennkraftmaschine, umfassend eine Zylinderlaufbuchse und einen Stahlkolben, der in der Zylinderlaufbuchse (2) geführt ist und der ein Kolbenobertell (6) und einen Kolbenschaft umfasst, wobei ein Kolbenboden (7) des Kolbenoberteils (6) umfangsseitig in einen Feuersteg (8) übergeht, an den sich ein zur Aufnahme von Kolbenringen (3, 4) bestimmtes Ringfeld (9) anschlleßt, in dem die Kolbenringe (3, 4) von einem Ringsteg (12) beabstandet in Ringnuten (10,11) positioniert sind, **dadurch gekennzeichnet, dass** der erste Ringsteg (12) unter Einhaltung eines engen Kolbenspiels "X" bis an die Zylinderlaufbuchse (2) geführt ist und in dem Ringsteg (12) eine von der ersten Ringnut (10) und der zweiten Ringnut (11) beabstandete Entlastungsnut (13) eingebracht ist, die eine gegenüber der zweiten Ringnut (11) geringere Tiefe sowie von einem gerundeten Nutgrund (16) ausgehende, unterschiedlich geneigt verlaufende Flanken aufweist, wobei der Ringsteg (12) von der zweiten, d.h unteren Ringnut (11) ausgehend eine sich zur ersten, d.h. oberen Ringnut (12) aufweitende Konizität aufweist.

2. Stahlkolbehanordnung nach Anspruch 1, **dadurch gekennzeichnet, dass** zwischen einem der ersten Ringnut (10) zugeordneten Bereich des Ringstegs (12) und einer Innenwandung (5) der Zylinderlaufbuchse (2) ein radiales Kolbenspiel "x" von 15 µm bis 60 µm vorgesehen ist.

3. Stahlkolbenanordnung nach Anspruch 1 oder 2, **dadurch gekennzeichnet, dass** für die Entlastungsnut (13) eine Tiefe "b" von ≥ 70% der radialen Tiefe "a" der zweiten Ringnut (11) vorgesehen ist.

4. Stahlkolbenanordnung nach einem der vorhergehenden Ansprüche, **dadurch gekennzeichnet, dass** ein Abstand "s" zwischen der Entlastungsnut (13) und der zweiten Ringnut (11) ≥ 20% des Abstandes zwischen der ersten Ringnut (10) und der zweiten Ringnut (11) beträgt.

5. Stahlkolbenanordnung nach einem der vorhergehenden Ansprüche, **dadurch gekennzeichnet, dass** die Entlastungsnut (13) eine Nuthöhe "h" von > 1,5 mm und ein Tiefen-/Höhenverhältnis (b / h) von > 1 aufweist.

6. Stahlkolbenanordnung nach einem der vorhergehenden Ansprüche, **dadurch gekennzeichnet, dass** der Neigungswinkel (α₂) der Oberflanke (14) ≥ dem Neigungswinkel (α₁) der Unterflanke (15) ausgeführt ist.

7. Stahlkolbenanordnung nach einem der vorhergehenden Ansprüche, **dadurch gekennzeichnet, dass** ein Radius "R" in einem Nutgrund (16) der Entlastungsnut (13) an die sich dort einstellende Nuthöhe angepasst ist.

8. Stahlkolbenanordnung nach einem der vorhergehenden Ansprüche, **dadurch gekennzeichnet, dass** in eine Oberflanke (17) der zweiten Ringnut (11) zumindest eine Aussparung (18) eingebracht ist.

9. Stahlkolbenanordnung nach Anspruch 8 **dadurch gekennzeichnet, dass** sich die Aussparung (18) in der Oberflanke (17) der zweiten Ringnut (11) bis nahe an den Nutgrund (19) erstreckt.

10. Stahlkolbenanordnung nach Anspruch 8 oder 9, **dadurch gekennzeichnet, dass** die ein weitestgehend halbrundartiges Querschnittsprofil aufweisende Aussparung (18) der Oberflanke (17) eine Tiefe "y" von ≥ 0,4 mm aufweist.

11. Stahlkolbenanordnung nach Anspruch 8, 9 oder 10, **dadurch gekennzeichnet, dass** sechs symmetrisch umfangsverteilte Aussparungen (18) in die Oberflanke (17) der zweiten Ringnut (11) eingebracht sind.

## Claims

1. Steel piston arrangement (1) of an internal combustion engine, said arrangement comprising a liner and a steel piston which is guided in the liner (2) and which comprises a piston upper part (6) and a piston skirt, wherein a piston head (7) of the piston upper part (6) merges circunferentially into a fire land (B) which is adjoined by a ring field (9) which is intended for receiving piston rings (3, 4) and in which the piston rings (3, 4) are positioned in ring grooves (10, 11) at a distance from a ring land (12), **characterized in that** the first ring land (12) is guided as far as the liner (2) keeping to a tight piston clearance "x", and the ring land (12) is provided with a relief groove (13) which is spaced apart from the first ring groove (10) and the second ring groove (11) and has a depth which is less than the second ring groove (11) and flanks which emerge from a rounded groove base (16) and run in a differently inclined manner, the ring land (12), starting from the second, i.e. lower, ring groove (11), having a conicity which widens with respect to the first, i.e. upper, ring groove (12).

2. Steel piston arrangement according to Claim 1, **characterized in that** a radial piston clearance "x" of 15 µm to 60 µm is provided between a region of the ring land (12) assigned to the first ring groove (10) and an inner wall (5) of the liner (2).

3. Steel piston arrangement according to Claim 1 or 2, **characterized in that** a depth "b" of ≥ 70% of the radial depth "a" of the second ring groove (11) is provided for the relief groove (13).

4. Steel piston arrangement according to one of the preceding claims, **characterized in that** a distance "s" between the relief groove (13) and the second ring groove (11) is ≥ 20% of the distance between the first ring groove (10) and the second ring groove (11).

5. Steel piston arrangement according to one of the preceding claims, **characterized in that** the relief groove (13) has a groove height "h" of > 1.5 mm and a depth/height ratio (b/h) of > 1.

6. Steel piston arrangement according to one of the preceding claims, **characterized in that** the angle of inclination (α₂) of the upper flank (14) is ≥ the angle of inclination (α₁) of the lower flank (15).

7. Steel piston arrangement according to one of the preceding claims, **characterized in that** a radius "R" in a groove base (16) of the relief groove (13) is matched to the groove height arising there.

8. Steel piston arrangement according to one of the preceding claims, **characterized in that** at least one recess (18) is provided in an upper flank (17) of the second ring groove (11).

9. Steel piston arrangement according to Claim 8, **characterized in that** the recess (18) in the upper flank (17) of the second ring groove (11) extends as far as close to the groove base (19).

10. Steel piston arrangement according to Claim 8 or 9, **characterized in that** the recess (18) of the upper flank (17), said recess having a very substantially semicircular cross-sectional profile, has a depth "y" of ≥ 0.4 mm.

11. Steel piston arrangement according to Claim 8, 9 or 10, **characterized in that** six recesses (18) distributed symmetrically around the circumference are provided in the upper flank (17) of the second ring groove (11).

## Revendications

1. Agencement de piston en acier (1) pour un moteur à combustion interne, comprenant une chemise de cylindre et un piston en acier, qui est guidé dans la chemise de cylindre (2), et qui comprend une partie supérieure de piston (6) et une tige de piston, un fond de piston (7) de la partie supérieure de piston (6) se prolongeant du côté périphérique par un cordon de feu (8) auquel se raccorde un champ de segment (9) prévu pour recevoir des segments de piston (3, 4), dans lequel les segments de piston (3, 4) sont positionnés à distance d'une nervure annulaire (12) dans des rainures annulaires (10, 11), **caractérisé en ce que** la première nervure annulaire (12) est guidée jusqu'à la chemise de cylindre (2) en conservant un jeu de piston étroit "x", et une rainure de décharge (13) espacée de la première rainure annulaire (10) et de la deuxième rainure annulaire (11) est pratiquée dans la nervure annulaire (12), laquelle (13) présente une moindre profondeur par rapport à la deuxième rainure annulaire (11) ainsi que des flancs partant d'une base de rainure arrondie (16), s'étendant avec une inclinaison différente, la nervure annulaire (12) présentant à partir de la deuxième rainure annulaire, c'est-à-dire la rainure annulaire inférieure (11), une conicité s'élargissant jusqu'à la première rainure annulaire, c'est-à-dire la rainure annulaire supérieure (12).

2. Agencement de piston en acier selon la revendication 1, **caractérisé en ce qu'**un jeu de piston radial "x" de 15 µm à 60 µm est prévu entre une région de la nervure annulaire (12) associée à la première rainure annulaire (10) et une paroi interne (5) de la chemise de cylindre (2).

3. Agencement de piston en acier selon la revendication 1 ou 2, **caractérisé en ce que** pour la rainure de décharge (13) est prévue une profondeur "b" de ≥ 70% de la profondeur radiale "a" de la deuxième rainure annulaire (11).

4. Agencement de piston en acier selon l'une quelconque des revendications précédentes, **caractérisé en ce qu'**une distance "s" entre la rainure de décharge (13) et la deuxième rainure annulaire (11) ≥ 20% de la distance entre la première rainure annulaire (10) et la deuxième rainure annulaire (11).

5. Agencement de piston en acier selon l'une quelconque des revendications précédentes, **caractérisé en ce que** la rainure de décharge (13) présente une hauteur de rainure "h" > 1,5 mm et un rapport profondeur/hauteur (b/h) > 1.

6. Agencement de piston en acier selon l'une quelconque des revendications précédentes, **caractérisé en ce que** l'angle d'inclinaison (α₂) du flanc supérieur (14) ≥ à l'angle d'inclinaison (α₁) du flanc inférieur (15).

7. Agencement de piston en acier selon l'une quelconque des revendications précédentes, **caractérisé en ce qu'**un rayon "R" dans une base de rainure (16) de la rainure de décharge (13) est adapté à la hauteur de rainure qui s'y établit.

8. Agencement de piston en acier selon l'une quelconque des revendications précédentes, **caractérisé en ce qu'**au moins un évidement (18) est réalisé dans un flanc supérieur (17) de la deuxième rainure annulaire (11).

9. Agencement de piston en acier selon la revendication 8, **caractérisé en ce que** l'évidement (18) dans le flanc supérieur (17) de la deuxième rainure annulaire (11) s'étend jusqu'à proximité de la base de rainure (19).

10. Agencement de piston en acier selon la revendication 8 ou 9, **caractérisé en ce que** l'évidement (18) du flanc supérieur (17) présentant un profil en section transversale essentiellement semi-circulaire présente une profondeur "y" ≥ 0,4 mm.

11. Agencement de piston en acier selon la revendication 8, 9 ou 10, **caractérisé en ce que** six évidements (18) répartis symétriquement sur la périphérie sont pratiqués dans le flanc supérieur (17) de la deuxième rainure annulaire (11).
